# FASCICULE DE BREVET EUROPEEN

(11) **EP 0 586 270 B1**
(45) Date de publication et mention de la délivrance du brevet: **05.03.1997**
(21) Numéro de dépôt: 93401880.5
(22) Date de dépôt: 21.07.1993
(51) Int. Cl.: B04B 9/12

(54) **Centrifugeur comportant un arbre d'entraînement de rotor à joint élastique d'amortissement**
Zentrifuge mit Rotorantriebsachse mit einer elastischen Dämpferverbindung
Centrifuge having a rotor drive shaft with a resilient damper joint

(30) Priorité: 04.08.1992 FR 9209667
(43) Date de publication de la demande: 09.03.1994
(73) Titulaire: JOUAN, Société Anonyme dite, F-44600 Saint Nazaire (FR)
(72) Inventeur: Letourneur, Jean-Claude, F-44380 Pornichet (FR)
(74) Mandataire: Peuscet, Jacques

(56) Documents cités:
- DE-A- 2 835 962
- DE-C- 549 253
- DE-C- 622 699
- GB-A- 467 478
- GB-A- 2 037 939

## Description

La présente invention a pour objet un centrifugeur comportant un arbre d'entraînement de rotor à joint élastique d'amortissement, en particulier centrifugeur tournant à très grande vitesse.

En général, le rotor d'un centrifugeur tournant à grande vitesse est entraîné en rotation par un arbre flexible entouré d'un fourreau, l'arbre flexible et le fourreau étant montés à rotation dans un palier à billes et liés à un arbre moteur, le plus souvent l'arbre d'un moteur électrique d' entraînement, par l'intermédiaire d'un accouplement élastique. Comme on le sait, l'arbre flexible a pour rôle de limiter la transmission, au bâti du centrifugeur, des vibrations générées par le rotor et dûes, par exemple, aux tolérances de fabrication ou à une mauvaise répartition du chargement. On sait, également, que, lorsque l'arbre souple, équipé du rotor, est en rotation, il tend à tourner autour de son axe d'inertie passant par le centre de gravité de l'ensemble arbre-rotor ; plus précisément, après une première phase de flexion de l'arbre engendrée par le balourd de l'ensemble, l'effet gyroscopique génère un couple de redressement et, en final, l'axe de rotation passe par le centre de gravité de l'ensemble : cette phase, stabilisée, est obtenue à une vitesse de rotation de l'ordre de 400 à 1 000 t/mn, fonction, bien entendu, de l'arbre, du rotor, et du balourd ; cet axe final de rotation est déporté radialement parallèlement à l'axe géométrique de montage de l'ensemble.

On a déjà proposé de limiter, d'une part, et amortir, d'autre part, ce déport radial ; c'est le cas, par exemple, du montage décrit dans US-A-4 568 324 : un joint élastique est disposé entre l'arbre flexible et le fourreau solidaire de l'arbre pour amortir ledit déport radial qui, par ailleurs, est limité par un manchon fixe, solidaire du bâti, entourant l'arbre flexible et portant un roulement à billes à distance, axialement, du joint élastique amortisseur, le déport radial étant limité par le jeu radial existant entre l'arbre flexible et la piste interne du roulement. Ce montage présente les inconvénients suivants : d'une part, lorsque ce jeu radial est absorbé, l'arbre vient buter sur la piste interne du roulement alors que celle-ci est arrêtée, ce qui conduit rapidement à la détérioration de l'arbre ; d'autre part, de par la disposition relative du rotor, du roulement et du joint élastique, ce dernier est éloigné du rotor, source principale de balourd et vibrations, et l'amortissement n'est pas convenablement réalisé.

Dans DE-A-2835962, on a décrit un centrifugeur comportant un arbre d'entraînement de rotor constitué d'un arbre flexible entouré d'un fourreau, ledit arbre et ledit fourreau étant solidaires en rotation à l'une de leurs extrémités, l'autre extrémité de l'arbre flexible dépassant de l'autre extrémité du fourreau et portant une tête adaptée à recevoir le rotor du centrifugeur, et solidarisée à rotation à l'arbre flexible, des moyens étant prévus pour amortir et limiter le déplacement radial de l'arbre ; lesdits moyens d'amortissement et de limitation sont axialement disposés au même niveau, et proches de la tête, pour amortir et limiter le déplacement radial de l'arbre par rapport au fourreau tournant ; la tête comporte une jupe entourant l'extrémité du fourreau, lesdits moyens d'amortissement et de limitation étant disposés entre ladite jupe et ledit fourreau ; lesdits moyens sont constitués d'un joint annulaire en matériau élastique. Ce dispositif présente tout d'abord l'inconvénient d'utiliser un anneau en matériau élastique qui travaille en cisaillement, ce qui est assez défavorable pour sa longévité ; par ailleurs, le remplacement de cet anneau en matériau élastique nécessite un démontage de pièces important. Ce dispositif présente également l'inconvénient d'avoir un espace libre non protégé entre la jupe de la tête et un anneau cylindrique solidaire du fourreau, cet espace étant susceptible de recevoir des salissures ainsi que de l'eau de condensation attirée par un phénomène de pompe centrifuge, de sorte que la cavité constituée entre la jupe et l'anneau cylindrique se remplit, ce qui est une source de contamination vu l'impossibilité d'un nettoyage sans démontage.

La présente invention a pour but de pallier ces inconvénients.

Selon l'invention, un centrifugeur du type ci-dessus défini est caractérisé par le fait que la jupe présente intérieurement une gorge annulaire recevant le joint annulaire, la paroi transversale inférieure de la jupe, qui limite la gorge annulaire, étant percée d'un alésage qui limite radialement le déport de l'arbre flexible par rapport au fourreau, et par le fait que le joint annulaire porte une lèvre, qui s'étend axialement dans ledit alésage et est disposée radialement entre la jupe et le fourreau.

De préférence, le joint annulaire est monté en compression entre la jupe et le fourreau ; les extrémités de l'arbre et du fourreau solidarisées en rotation sont reçues dans un logement de l'une des deux pièces d'un accouplement élastique dont l'autre pièce est solidaire d'un arbre moteur d'entraînement ; le fourreau est monté sur le chassis du centrifugeur par l'intermédiaire d'un palier à billes comportant un manchon portant deux roulements à billes ; le manchon est fermé, à chacune de ses extrémités, par un joint à chicane ; l'un des roulements est axialement en butée sur un jonc porté par le manchon, l'autre roulement étant mis en contrainte axiale par une rondelle axialement élastique.

Grâce à l'invention, l'amortissement des vibrations est réalisé près de leur source principale qu'est le rotor porté par la tête, et le débattement radial est limité entre deux pièces, la jupe et l'arbre, qui tournent à la même vitesse, la lèvre du joint annulaire évitant le contact métal sur métal, et assurant, de plus, une progressivité du contact.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 1 est une vue générale schématique, partiellement en coupe, montrant un centrifugeur selon l'invention ;
- la figure 2 est une vue en coupe, à plus grande échelle, partielle, du centrifugeur de la figure 1, montrant en particulier le détail du montage de l'arbre d'entraînement du rotor ;
- la figure 3 est une vue en coupe, à plus grande échelle, du joint élastique seul utilisé pour le montage de l'arbre selon la figure 2.

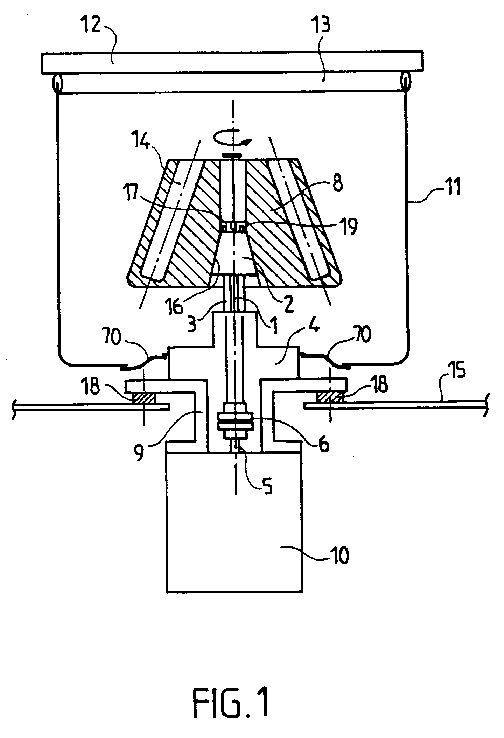

En se reportant à la figure 1, un centrifugeur comprend un rotor 8 ; le rotor 8, représenté de forme tronconique sur la figure, peut être, bien entendu, de toute forme, par exemple cylindrique ou à la fois cylindrique et tronconique, ou autre. Sur la figure 1, le rotor 8 est muni d'alvéoles 14, régulièrement réparties à sa périphérie et destinées à recevoir des tubes de centrifugation contenant le liquide à centrifuger ; le rotor 8 peut, à la place des alvéoles 14, porter des godets munis notamment de carénages limitant les turbulences.

Pour son entraînement en rotation, le rotor 8 présente, selon son axe, un logement 16 débouchant à sa partie inférieure ; le logement 16 est limité à sa partie supérieure par un voile 17 perpendiculaire à l'axe du rotor 8.

Un moteur électrique 10 est porté par une bride de fixation 9, elle-même fixée au chassis 15 du centrifugeur par l'intermédiaire de plots élastiques 18.

Le rotor 8, par son logement 16, est monté sur une tête 2 de forme correspondant au logement 16 ; à sa partie supérieure, sur sa face transversale, la tête 2 porte des ergots axiaux 19 venant se loger, lorsque le rotor 8 est monté sur la tête 2, dans des trous prévus, à cet effet, dans le voile 17 du rotor 8 ; l'entraînement en rotation du rotor 8 par la tête 2 est positivement assuré par la coopération des ergots 19 avec les bords des trous du voile 17. Bien entendu, les ergots axiaux 19 représentés peuvent être accompagnés ou remplacés par tout autre moyen d'entraînement en rotation s'étendant axialement et/ou transversalement.

La tête 2 est solidaire d'un arbre 1 ; l'arbre 1 est entouré par un fourreau 3 ; l'arbre 1 et le fourreau 3 sont montés à rotation, par rapport au chassis 15, par l'intermédiaire d'un palier à billes 4 solidaire de la bride 9 ; à leur extrémité inférieure, l'arbre 1 et le fourreau 3 sont reliés à l'arbre 5 du moteur électrique 10 par un accouplement élastique 6. Le palier à billes 4 est relié à une cuve 11, solidaire du chassis 15, par une couronne élastique 70 assurant l'étanchéité entre les deux éléments ; la cuve 11 est munie à sa partie supérieure d'un joint 13 et d'un couvercle 12 : comme on le sait, la cuve 11 permet un meilleur contrôle de la température des tubes de centrifugation dans les alvéoles 14, ce contrôle étant important surtout lorsqu'il s'agit de centrifugeur utilisé en applications médicales ou en biochimie, bon nombre de produits biologiques devant être maintenus à des températures bien déterminées, ces températures pouvant varier entre 4°C et 37°C.

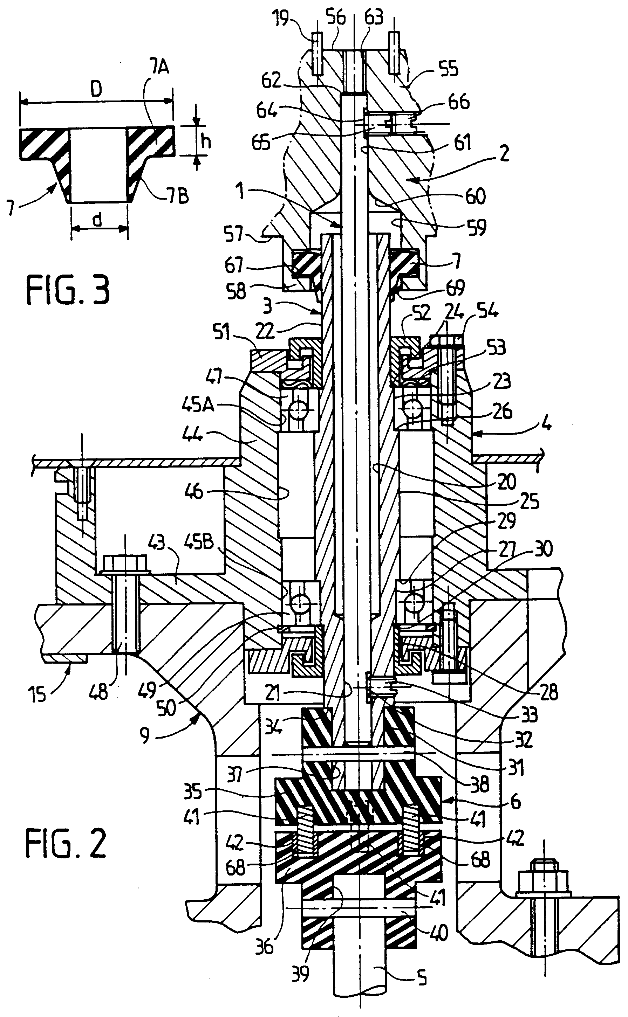

On va maintenant, en référence à la figure 2, décrire plus en détail le montage en rotation de la tête 2 sur l'arbre moteur 5, ce montage faisant partie de l'invention.

Le fourreau 3 est un élément tubulaire allongé de section circulaire ; il présente un alésage intérieur 20 débouchant à sa partie supérieure, et un alésage 21, de même axe mais de diamètre inférieur à celui de l'alésage 20 et débouchant à sa partie inférieure ; l'alésage 21 a une longueur axiale inférieure à celle de l'alésage 20. La surface extérieure, de section circulaire, du fourreau 3 comprend axialement des portions de diamètres légèrement différents ; depuis son extrémité supérieure, et vers son extrémité inférieure, elle comprend une portion 22, suivie d'une portion 23 de diamètre plus grand, les portions 22 et 23 définissant ainsi une portée transversale 24 ; la portion 23 est suivie d'une portion 25 de plus grand diamètre, les portions 23 et 25 définissant ainsi une portée transversale 26 ; la portion 25 est suivie de portions 27 et 28 de diamètres respectivement égaux aux diamètres des portions 23 et 22, et des portées 29 et 30, transversales, sont également définies. La portion 28 est suivie d'une portion de plus petit diamètre qui constitue l'extrémité inférieure 31 du fourreau 3, et définit une portée transversale 34.

L'arbre flexible 1 a un diamètre pratiquement égal à celui de l'alésage 21 du fourreau 3, dans lequel il est monté ; la tolérance de fabrication exigée pour l'alésage 21 et l'arbre flexible 1 conduit à une différence de diamètres qui ne doit pas dépasser 1 centième de millimètre : cet ajustement permet une excellente concentricité de l'arbre 1 et du fourreau 3 ; la solidarisation de l'arbre 1 et du fourreau 3 est obtenue par collage ; pour des raisons de sécurité, l'extrémité inférieure de l'arbre 1 présente un méplat 32 sur lequel s'appuie l'extrémité d'une vis sans tête 33 qui traverse la paroi du fourreau 3, au droit de la portion 28, dans laquelle elle est vissée ; à leurs extrémités inférieures, l'arbre 1 et le fourreau 3 se terminent dans un même plan transversal ; à leurs extrémités supérieures, l'arbre 1 dépasse du fourreau 3.

L'accouplement élastique 6 est constitué de deux pièces cylindriques de révolution identiques 35, 36. La pièce 35 comporte un logement 37 recevant l'extrémité inférieure 31 du fourreau 3 et est en appui sur la portée 34. Une goupille 38 traverse transversalement la pièce 35 et le fourreau 3 pour assurer la solidarisation en rotation de ces deux éléments. De manière analogue, la pièce 36 comporte un logement 39 recevant l'extrémité de l'arbre moteur 5 ; une goupille 40 traverse transversalement la pièce 36 et l'arbre moteur 5 pour assurer la solidarisation en rotation de ces deux éléments.

Chacune des pièces 35 et 36 porte deux pions diamétralement opposés 41 et deux logements 42 suivant un diamètre perpendiculaire au diamètre défini par les pions 41 recevant un élément tubulaire 68, en silicone ; lorsque les deux pièces 35 et 36 sont assemblées, les deux pions de l'une sont logés dans les éléments tubulaires 68 de l'autre ; ainsi, l'entraînement souple en rotation est assuré par quatre pions 41 à quatre-vingt dix degrés.

Le palier 4 porte un voile 43 le solidarisant par des vis 48 à la bride 9, portée par le chassis 15, et un manchon 44 dans lequel tourillonne l'ensemble formé par le fourreau 3 et l'arbre 1. Le manchon 44 présente intérieurement deux alésages 45A, 45B, de même diamètre, débouchant à l'extérieur et axialement séparés par un alésage 46 de plus grand diamètre. L'alésage 45B reçoit un roulement 49 arrêté verticalement par un jonc 50 élastique inséré dans un logement annulaire ménagé à la périphérie de l'alésage 45B, la largeur radiale du jonc 50 étant plus grande que la profondeur radiale du logement annulaire. Le fourreau 3, enfilé dans le roulement 49, par sa portion 27, repose verticalement, par sa portée 29, sur la piste intérieure du roulement 49.

L'alésage 45A reçoit la piste extérieure d'un roulement 47 dont la piste intérieure est enfilée sur la portion 23 du fourreau 3 et repose verticalement sur la portée 26.

Des joints à graisse à chicane ferment les extrémités supérieure et inférieure du manchon 44 ; à l'extrémité supérieure, le joint à chicane est constitué d'une partie fixe 51 métallique et d'une partie tournante 52 en matière plastique ; la partie tournante 52 est emmanchée à force sur la portion 22 du fourreau 3, jusqu'à venir axialement en butée sur la portée 24, et présente un retour axial, dirigé vers l'intérieur du manchon 44, partiellement engagé et tournant dans une gorge ouverte vers l'extérieur prévue dans la partie fixe 51. La partie fixe 51 est fixée sur la face plane transversale d'extrémité du manchon 44 par des vis 54 dont le serrage est tel que la partie fixe 51 comprime, lorsqu'elle est montée, une rondelle axialement élastique 53 disposée axialement entre la partie fixe 51 et le roulement 47 ; cette mise en compression de la rondelle 53 assure une précontrainte axiale du roulement 47.

A l'extrémité inférieure du manchon 44 est également disposé un joint à chicane identique au joint 51-52, qui ne sera donc pas décrit ; il n'y a pas de rondelle élastique entre le roulement 49 et le joint à chicane inférieur.

A son extrémité supérieure dépassant du fourreau 3, l'arbre flexible 1 porte la tête 2 représentée partiellement sur la figure 2. De façon plus détaillée, la tête 2 est constituée d'une pièce 55 limitée par deux faces parallèles 56 et 57 ; la face 56, supérieure, porte les ergots 19 d'entraînement du rotor 8 ; depuis la face 57, inférieure, s'étend axialement vers le bas une jupe 58 définissant un logement intérieur cylindrique 59 s'étendant vers le haut, à l'intérieur de la pièce 55, au delà du plan tranversal contenant la face 57 de la pièce 55. Le logement cylindrique 59 est suivi axialement vers le haut d'une section 60 conique de raccordement à un alésage cylindrique 61 recevant l'extrémité de l'arbre 1 qui vient axialement en butée sur une portée transversale 62 qui sépare l'alésage 61 d'un alésage 63 fileté coaxial de plus petit diamètre et débouchant à l'extérieur ; l'alésage 61 a un diamètre pratiquement égal à celui de l'arbre 1 ; là aussi, un ajustement précis permet une excellente concentricité de l'arbre 1 et de la tête 2 ; pour des raisons de démontabilité, l'arbre 1 et la tête 2 ne sont pas collés ; pour assurer l'entraînement en rotation de la tête 2 par l'arbre 1, l'arbre 1 porte un méplat 64 sur lequel s'appuie l'extrémité d'une première vis sans tête 65 qui traverse transversalement la paroi de la pièce 55, au droit de l'alésage 61, dans laquelle elle est vissée ; pour la sécurité de l'entraînement, une deuxième vis sans tête 66 est vissée à la suite de la première vis 65, et sert de contre-vis.

Lorsque la tête 2 est montée sur l'arbre 1, comme décrit ci-dessus, le fourreau 3 s'étend dans l'alésage 59 au droit de la jupe 58, pratiquement jusqu'au plan tranversal contenant la face 57 de la pièce 55. La jupe 58 comporte intérieurement une gorge annulaire 67.

Un joint élastique 7 est disposé dans la gorge 67 ; le joint 7 est montré, à l'état libre, sur la figure 3 ; comme on le voit sur la figure 2, il est monté en contrainte radiale entre le fourreau 3 et la tête 2 solidaire de l'arbre 1 ; le joint 7 est constitué d'un anneau circulaire 7A de révolution, prolongé vers le bas d'une lèvre conique 7B. La contrainte de compression du joint 7 monté dépend de la dureté du matériau : plus celle-ci est faible, plus la contrainte doit être grande, dans une certaine mesure limitée par les difficultés de mise en place ; de plus, l'amortissement des vibrations basses fréquences est d'autant meilleur que la dureté du matériau est faible. De bons résultats ont été obtenus en utilisant du néoprène ayant une dureté Shore égale à 40 à 10 % près ; la mise en compression a été obtenue en insérant un anneau 7A de diamètre D = 28 mm, de hauteur h = 4,5 mm et de diamètre au centre d = 15,5 mm, entre un fourreau 3 de diamètre extérieur 16 mm et une gorge 67 de diamètre intérieur 27,2 mm, sur une hauteur de 5,2 mm.

## Revendications

1. Centrifugeur, comportant un arbre d'entraînement de rotor constitué d'un arbre flexible (1) entouré d'un fourreau (3), ledit arbre (1) et ledit fourreau (3) étant solidaires en rotation à l'une de leurs extrémités, l'autre extrémité de l'arbre flexible (1) dépassant de l'autre extrémité du fourreau (3) et portant une tête (2) adaptée à recevoir le rotor (8) du centrifugeur, et solidarisée à rotation à l'arbre flexible (1), des moyens (7A, 69) étant prévus pour amortir et limiter le déplacement radial de l'arbre (1), lesdits moyens (7A, 69) d'amortissement et de limitation étant axialement disposés au même niveau, et proches de la tête (2), pour amortir et limiter le déplacement radial de l'arbre (1) par rapport au fourreau (3) tournant, la tête (2) comportant une jupe (58) entourant l'extrémité du fourreau (3), lesdits moyens (7A, 69) d'amortissement et de limitation étant disposés entre ladite jupe (58) et ledit fourreau (3), et constitués d'un joint annulaire (7A) en matériau élastique, caractérisé par le fait que la jupe (58) présente intérieurement une gorge annulaire (67) recevant le joint annulaire (7A), la paroi transversale inférieure de la jupe (58), qui limite la gorge annulaire (67), étant percée d'un alésage (69), qui limite radialement le déport de l'arbre flexible (1) par rapport au fourreau (3), et par le fait que le joint annulaire (7A) porte une lèvre (7B), qui s'étend axialement dans ledit alésage (69) et est disposée radialement entre la jupe (58) et le fourreau (3).

2. Centrifugeur selon la revendication 1, caractérisé par le fait que le joint annulaire (7A) est monté en compression entre la jupe (58) et le fourreau (3).

3. Centrifugeur selon l'une des revendications 1 ou 2, caractérisé par le fait que les extrémités de l'arbre (1) et du fourreau (3) solidarisées en rotation sont reçues dans un logement (37) de l'une (35) des deux pièces (35, 36) d'un accouplement élastique (6), une goupille (38) traversant radialement l'arbre (1), le fourreau (3) et la pièce (35), l'autre pièce (36) de l'accouplement étant solidaire d'un arbre moteur (5) d'entraînement.

4. Centrifugeur selon l'une des revendications 1 à 3, caractérisé par le fait que le fourreau (3) est monté sur le chassis (15) du centrifugeur par l'intermédiaire d'un palier à billes (4) comportant un manchon (44) portant deux roulements à billes (47, 49).

5. Centrifugeur selon la revendication 4, caractérisé par le fait que le manchon (44) est fermé, à chacune de ses extrémités, par un joint à chicane (51-52).

6. Centrifugeur selon la revendication 4, caractérisé par le fait que l'un des roulements (49) est axialement en butée sur un jonc (50) porté par le manchon (44), l'autre roulement (47) étant mis en contrainte axiale par une rondelle (53) axialement élastique.

## Claims

1. Centrifuge, including a rotor driveshaft consisting of a flexible shaft (1) surrounded by a sheath (3), the said shaft (1) and the said sheath (3) being rotationally secured at one of their ends, the other end of the flexible shaft (1) extending beyond the other end of the sheath (3) and carrying a head (2) which is adapted to receive the rotor (8) of the centrifuge, and rotationally secured to the flexible shaft (1), means (7A, 69) being provided for damping and limiting the radial displacement of the shaft (1), the said damping and limiting means (7A, 69) being axially arranged at the same level as and close to the head (2), in order to damp and to limit the radial displacement of the shaft (1) with respect to the rotating sheath (3), the head (2) including a skirt (58) surrounding the end of the sheath (3), the said damping and limiting means (7A, 69) being arranged between the said skirt (58) and the said sheath (3), and consisting of an annular seal (7A) made from an elastic material, characterized in that the skirt (58) internally has an annular groove (67) receiving the annular seal (7A), the lower transverse wall of the skirt (58) which limits the annular groove (67) being pierced with a bore (69) which radially limits the offset of the flexible shaft (1) with respect to the sheath (3) and in that the annular seal (7A) carries a lip (7B) which extends axially into the said bore (69) and is arranged radially between the skirt (58) and the sheath (3).

2. Centrifuge according to Claim 1, characterized in that the annular seal (7A) is mounted in compression between the skirt (58) and the sheath (3).

3. Centrifuge according to one of Claims 1 or 2, characterised in that the ends of the shaft (1) and of the sheath (3) which ends are rotationally secured are received in a housing (37) of one (35) of the two pieces (35, 36) of an elastic coupling (6), a pin (38) passing radially through the shaft (1), the sheath (3) and the piece (35), the other piece (36) of the coupling being secured to a motor driveshaft (5).

4. Centrifuge according to one of Claims 1 to 3, characterized in that the sheath (3) is mounted on the chassis (15) of the centrifuge by means of a ball bearing race (4) including a sleeve (44) carrying two ball bearings (47, 49).

5. Centrifuge according to Claim 4, characterized in that the sleeve (44) is closed at each of its ends by a labyrinth seal (51-52).

6. Centrifuge according to Claim 4, characterized in that one of the rolling-contact bearings (49) axially abuts against a snap ring (50) carried by the sleeve (44), the other rolling-contact bearing (47) being stressed axially by an axially elastic washer (53).

## Patentansprüche

1. Zentrifuge mit einer Rotorantriebswelle, die von einer flexiblen, von einer Hülse (3) umgebenen Welle (1) gebildet wird, wobei die Welle (1) und die Hülse (3) an einem ihrer Enden drehfest miteinander verbunden sind, während das andere Ende der flexiblen Welle (1) über das andere Ende der Hülse (3) hinausragt und einen Kopf (2) trägt, der zur Aufnahme des Rotors (8) der Zentrifuge dient und der mit der flexiblen Welle (1) drehfest verbunden ist, wobei Mittel (7A, 69) zum Dämpfen und Begrenzen der Radialbewegung der Welle (1) vorgesehen sind und diese Dämpfungs- und Begrenzungsmittel (7A, 69) axial versetzt, auf gleicher Höhe in der Nähe des Kopfes (2) angeordnet sind, um die Radialbewegung der Welle (1) gegenüber der drehenden Hülse (3) zu dämpfen und zu begrenzen, wobei der Kopf (2) eine Schürze (58) aufweist, die das Ende der Hülse (3) umgibt, und die Dämpfungs- und Begrenzungsmittel (7A, 69) zwischen der Schürze (58) und der Hülse (3) angeordnet sind und aus einem Dichtring (7A) aus elastischem Material bestehen, dadurch gekennzeichnet, daß die Schürze (58) innen eine Ringnut (67) aufweist, die den Dichtring (7A) aufnimmt, wobei die untere Querwand der Schürze (58), welche die Ringnut (67) begrenzt, von einer Bohrung (69) durchquert wird, welche die radiale Verlagerung der flexiblen Welle (1) gegenüber der Hülse (3) begrenzt, und dadurch, daß die Ringdichtung (7A) eine Lippe (7B) trägt, die sich axial in die Bohrung (69) erstreckt und radial zwischen der Schürze (58) und der Hülse (3) angeordnet ist.

2. Zentrifuge gemäß Anspruch 1, dadurch gekennzeichnet, daß die Ringdichtung (7A) mit einem Preßsitz zwischen der Schürze (58) und der Hülse (3) eingebaut ist.

3. Zentrifuge gemäß einem der Ansprüche 1 oder 2, dadurch gekennzeichnet, daß die drehfest miteinander verbundenen Enden der Welle (1) und der Hülse (3) in einer Ausnehmung (37) von einem (35) von zwei Bauteilen (35, 36) einer elastischen Kupplung gehalten sind, wobei ein Stift (38) die Welle (1), die Hülse (3) und das Bauteil (35) radial durchquert, während das andere Bauteil (36) der Kupplung mit einer Motorantriebswelle (5) verbunden ist.

4. Zentrifuge gemäß einem der Ansprüche 1 bis 3, dadurch gekennzeichnet, daß die Hülse (3) auf dem Rahmen (15) der Zentrifuge mittels eines Kugellagers (4) montiert ist, das eine Manschette (44) aufweist, die zwei Kugellagerrollen (47, 49) trägt.

5. Zentrifuge gemäß Anspruch 4, dadurch gekennzeichnet, daß die Manschette (44) an jedem ihrer Enden durch eine schikanenartige Packung (51-52) verschlossen ist.

6. Zentrifuge gemäß Anspruch 4, dadurch gekennzeichnet, daß eine der Rollen (49) gegen einen von der Manschette (44) gehaltenen Ring (50) in Anlage ist, während die andere Rolle (47) durch eine axial elastische Scheibe (53) einer Axialbelastung ausgesetzt ist.
